# EUROPÄISCHE PATENTSCHRIFT

(11) **EP 1 368 145 B1**
(45) Veröffentlichungstag und Bekanntmachung des Hinweises auf die Patenterteilung: **08.09.2004**
(21) Anmeldenummer: 02710658.2
(22) Anmeldetag: 29.01.2002
(51) Int. Cl.: B21F 27/10, B23K 11/00

(54) **VIELPUNKT-SCHWEISSMASCHINE ZUM HERSTELLEN VON DRAHTGITTERMATTEN**
MULTISPOT WELDING MACHINE FOR PRODUCING WIRE MESH MATS
MACHINE A SOUDER MULTIPOINT POUR LA PRODUCTION DE GRILLAGES SOUDES

(30) Priorität: 07.03.2001 AT 3562001
(43) Veröffentlichungstag der Anmeldung: 10.12.2003
(73) Patentinhaber: EVG Entwicklungs- u. Verwertungs- Gesellschaft m.b.H., A-8042 Raaba (AT)
(72) Erfinder: RITTER, Klaus, A-8042 Graz (AT)
(74) Vertreter: Holzer, Walter, Dipl.-Ing.
(86) Internationale Anmeldenummer: PCT/AT2002/000035
(87) Internationale Veröffentlichungsnummer: WO 2002/070168

(56) Entgegenhaltungen:
- EP-A- 0 241 449
- WO-A-89/11933
- WO-A-90/14181
- DE-A- 2 165 772
- DE-B- 1 765 328
- US-A- 5 013 879

## Beschreibung

Die Erfindung betrifft eine nach der elektrischen Widerstandsmethode arbeitende Vielpunkt-Schweißmaschine zum Herstellen von Drahtgittermatten aus einer Schar von parallelen Längsdrähten und diese rechtwinkelig kreuzenden Querdrähten, die jeweils oberhalb und unterhalb der Längsdrähte einander gegenüberliegend angeordnet und mit den Längsdrähten verschweißt sind, mit je einem oberhalb und unterhalb einer horizontalen Längsdrahtzuführebene angeordneten Querdrahtkanal, mit Querdrahtzubringern, welche die Querdrähte aus den Querdrahtkanälen in die Schweißebene zwischen die Längsdrahtschar und beiderseits derselben angeordneten Reihen von heb- und senkbaren oberen Schweißelektroden und unteren Schweißelektroden bringen, und mit je einer die Längsdrahtzuführebene durchsetzenden Strombrücke für die Oberelektroden.

Aus der AT-B- 398 920 ist eine Gitterschweißmaschine dieser Gattung bekannt. Hierbei sind die Querdrahtzubringer auf der Auslaufseite der fertig geschweißten Drahtgittermatte und zusätzliche Querdrahtanschläge auf der Zulaufseite der Längsdrähte angeordnet. Die oberen Querdrähte werden unter Schwerkraftwirkung in die Schweißlage gefördert, während die unteren Querdrähte durch gabelförmige Zubringerelemente auf einem vorgeschriebenen Zubringerweg in die Schweißlage gehoben werden. Diese Maschine hat den Nachteil, dass die Querdrahtzubringer auf der Auslaufseite der Drahtgittermatte angeordnet sind und daher die Drahtgittermatte nach dem Schweißen erst dann weiter transportiert werden kann, wenn die Zubringerelemente die Bewegungsbahn der angeschweißten Querdrähte vollständig frei geben, was zur Folge hat, daß der Arbeitstakt der nächsten Schweißung erst entsprechend später erfolgen kann. Um Drahtgittermatten mit einer kleinen Querdrahtteilung herstellen zu können, müssen die Zubringerelemente extrem weit aus der Schweißebene heraus bewegt werden, wodurch ebenfalls der Arbeitstakt zwischen den Schweißungen entsprechend verlängert wird. Außerdem werden die oberen Querdrähte nur unter Wirkung der Schwerkraft in die Schweißebene gefördert, so dass die Zuführgeschwindigkeit dieser Querdrähte relativ langsam ist. In der Schweißebene sind außerdem zusätzliche Querdrahtanschläge erforderlich, die bei einer Änderung der Längsdrahtteilung ebenfalls verschoben werden müssen.

Aufgabe der Erfindung ist es, die geschilderten Nachteile zu vermeiden und eine Maschine der einleitend angegebenen Art zu schaffen, die es ermöglicht, eine Drahtgittermatte mit hoher Produktionsgeschwindigkeit wirtschaftlich herzustellen, wobei eine extrem kleine Querdrahtteilung und außerdem eine schnelle und technisch einfache Änderung der Längsdrahtteilung in der Drahtgittermatte möglich sein soll. Die erfindungsgemäße Maschine hat die Merkmale, daß je ein Querdrahtkanal oberhalb und unterhalb der Längsdrahtzuführebene in Produktionsrichtung gesehen auf der Einlaufseite der Längsdrahtschar vor der durch die Ober- und Unterelektroden definierten Schweißebene angeordnet ist, daß jeder Querdrahtbringer einen gleichzeitig schwenkund vorschiebbaren Zubringerarm aufweist und daß die beiden Zubringerarme in einer synchronen Zuführbewegung gleichzeitig die Querdrähte von den Querdrahtkanälen in die Schweißebene fördern, wobei der obere Querdraht auf den Längsdrähten und der untere Querdraht auf den Unterelektroden abgelegt wird.

Eine bevorzugte Ausführungsform der Erfindung zeichnet sich dadurch aus, daß die Zubringerarme eine gleichzeitige Vorschub- und Kippbewegung ausführen, wobei eine Bewegungseinrichtung vorgesehen ist, die von einer Verschubnocke und einer Kippnocke gesteuert wird, welche in einem festeingestellten Verhältnis auf einer gemeinsamen, kontinuierliche antreibbaren Antriebswelle drehfest angeordnet sind.

Nach einem weiteren Merkmal der Erfindung sind die Vorschubnocke und die Kippnocke derart gestaltet, daß nach dem Ablegen der Querdrähte in ihren Schweißpositionen in der Schweißebene trotz weiterhin kontinuierlichem Antrieb der Antriebswelle die Zubringerarme solange still stehen, bis die Querdrähte sicher zwischen den Längsdrähten und den Ober- und Unterelektroden festgeklemmt sind.

Vorzugsweise sind die Drehbewegung der Antriebswelle für die Vorschubnocke und für die Kippnocke mit den Bewegungen zum Zuführen der Querdrähte in die Querdrahtkanäle und mit den Vorschubbewegungen der Längsdrähte und der Drahtgittermatte mit Hilfe einer zentralen Steuerung abgestimmt.

Gemäß einer Weiterbildung der Erfindung ist vorgesehen, daß zum Ändern der Längsdrahtteilung die Oberelektroden in einem horizontal in der Schweißebene verschiebbaren oberen Schweißkopf und die Unterelektroden in einem horizontal in der Schweißebene verschiebbaren unteren Schweißkopf angeordnet sind, wobei der obere Schweißkopf und der untere Schweißkopf durch zwei Seitenplatten verbunden sind, und daß die Zubringerarme mit Hilfe je einer Klemmbefestigung horizontal parallel zur Schweißebene verschiebbar und fest anlegbar an ihrem Zubringerbalken angeordnet sind.

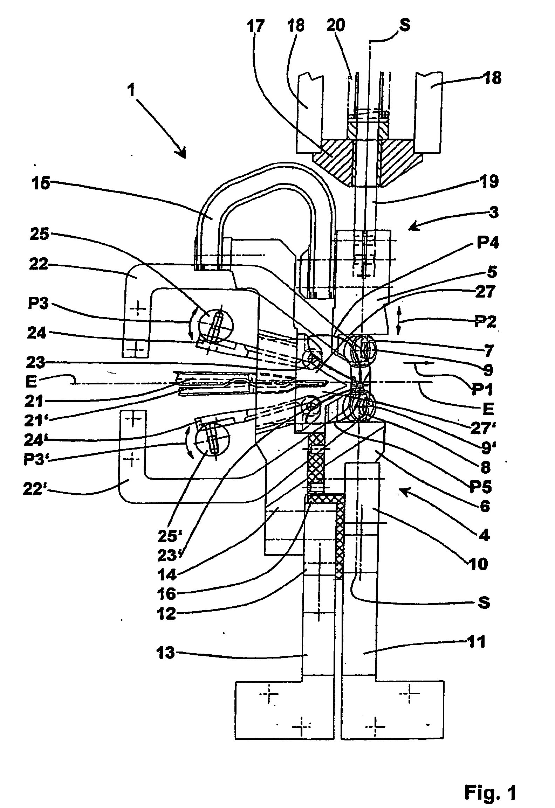

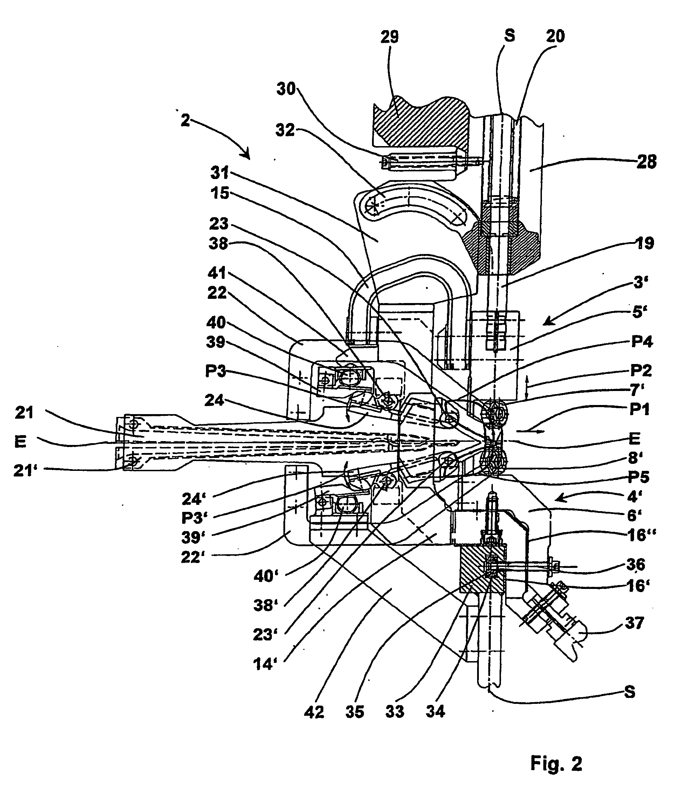

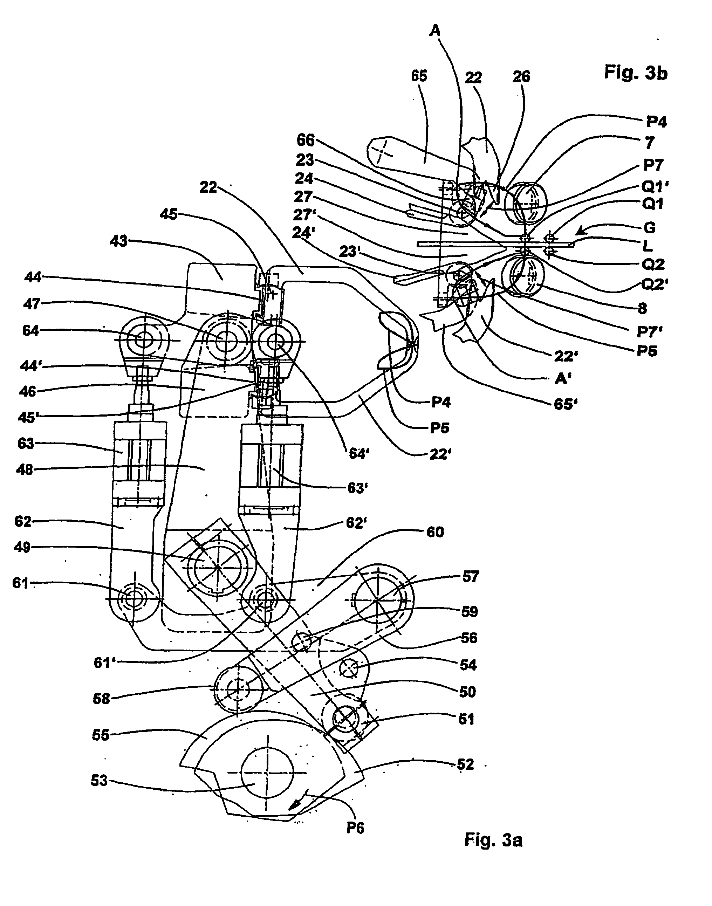

Weitere Merkmale und Vorteile der Erfindung werden nachfolgend an Ausführungsbeispielen unter Bezugnahme auf die Zeichnungen näher erläutert. Es zeigen: Fig. 1 eine Seitenansicht eines Ausführungsbeispieles einer erfindungsgemäßen Maschine mit feststehender Schweißeinheit, Fig. 2 eine Seitenansicht eines weiteren Ausführungsbeispieles der erfindungsgemäßen Maschine mit stufenlos verstellbarer Schweißeinheit, Fig. 3a eine schematische Seitenansicht der Bewegungseinrichtungen der Querdrahtzubringerarme für die Ausführungsbeispielenach den Fig. 1 und 2, und Fig. 3b die Zubringerbahnen der beiden Querdrähte.

Die in den Fig. 1 bis 3 dargestellten-Vorrichtungen finden Verwendung in einer Widerstands-Gitterschweißmaschine zum Herstellen von Drahtgittermatten G aus Stahldraht, die aus einander rechtwinkelig kreuzenden Längsdrähten L und oberen Querdrähten Q1 und unteren Querdrähten Q2 bestehen. Hierbei werden mehrere Längsdrähte L parallel und gemeinsam mit seitlichem Abstand zueinander, d.h. mit einer vorgegebenen Längsdrahtteilung, entlang der horizontal verlaufenden Längsdrahtzuführebene E-E entsprechend der Pfeilrichtung P1 zugeführt. Die oberen Querdrähte Q1 werden rechtwinkelig zu den Längsdrähten L auf diesen in der senkrecht zur Längsdrahtzuführebene E-E , vertikal verlaufenden Schweißebene S-S abgelegt, während die unteren Querdrähte Q2 rechtwinkelig zu den Längsdrähten unterhalb der Längsdrähte gleichzeitig mit den oberen Querdrähten Q1 in der Schweißebene S-S abgelegt werden. Die Querdrähte Q1, Q2 werden gemeinsam und gleichzeitig in den Kreuzungspunkten mit allen Längsdrähten L verschweißt. Die Oberfläche der Drähte L, Q1., Q2 kann glatt oder, wie bei Bewehrungsstählen üblich, eine gerippte sein.

Die in Fig. 1 dargestellte Vorrichtung weist je Längsdraht L eine feststehende Schweißeinheit 1 auf, die zur Herstellung von Drahtgittermatten G mit einer fest vorgegebenen, unveränderlichen Längsdrahtteilung dient. Die Schweißeinheit 1 weist einen oberhalb der Längsdrahtzuführebene E-E angeordneten, feststehenden oberen Schweißkopf 3 und einen unterhalb der Längsdrahtzuführebene E-E angeordneten, feststehenden unteren Schweißkopf 4 auf. Der obere Schweißkopf 3 hat einen entsprechend den Richtungen des Doppelpfeiles P2 heb- und senkbaren oberen Elektrodenhalter 5 und der untere Schweißkopf 4 einen ortsfesten unteren Elektrodenhalter 6. Im Rahmen der Erfindung ist es jedoch auch möglich, den unteren Elektrodenhalter 6 ebenfalls heb- und senkbar auszuführen. Am unteren Ende des oberen Elektrodenhalters 5 ist eine Oberelektrode 7 und am oberen Ende des unteren Elektrodenhalters 6 eine Unterelektrode 8 angeordnet. Die Oberelektrode 7 und die Unterelektrode 8 haben die Form einer Kreisscheibe und sind mit Verschraubungen 9 bzw. 9' mit ihren Elektrodenhaltern 5; 6 verschraubt. Die Ober- und Unterelektrode 7'; 8' können wie in Fig. 2 dargestellt, scheibenförmig in Form eines Vieleckes, beispielsweise eines Achtecks oder Zwölfecks ausgebildet sein. Im Rahmen der Erfindung können diese Ober- und Unterelektroden 7'; 8' an ihrem Umfang an jeder Vieleckfläche eine Querdrahtrille aufweisen, die zur Aufnahme des Querdrahtes Q1 bzw. Q2 beim Schweißen dient, V-förmig ausgebildet und an die Abmessungen des Querdrahtes Q angepasst ist.

Die Stromversorgung aller unteren Elektrodenhalter 6 erfolgt über eine vordere Sammelschiene 10, die mit dem vorderen Anschluß 11 eines Schweißtransformators oder den vorderen Anschlüssen mehrerer Schweißtransformatoren verbunden sind. Die Stromversorgung aller oberen Elektrodenhalter 5 erfolgt über eine hintere Sammelschiene 12, die mit dem hinteren Anschluß 13 eines Schweißtransformators oder den hinteren Anschlüssen mehrerer Schweißtransformatoren verbunden sind. Die Stromverbindung zum oberen Elektrodenhalter 5 erfolgt mit Hilfe einer Strombrücke 14, welche in Produktionsrichtung P1 gesehen auf der Einlaufseite der Längsdrahtschar L vor der Schweißebene S-S angeordnet ist, die Längsdrahtzuführebene E-E durchsetzt und im Bereich der Längsdrähte L entsprechende Durchgangsöffnungen für diese aufweist. Die Strombrücke 14 ist über ein flexibles Stromband 15 mit dem oberen, beweglichen Elektrodenhalter 5 verbunden. Die eine Hälfte des Schweißstromkreises der Schweißeinheit 1 wird von der vorderen Sammelschiene 10, dem unteren Elektrodenhalter 6 und der Unterelektrode 8 gebildet, während die andere Hälfte des Stromkreises von der hinteren Sammelschiene 12, der Strombrücke 14, dem Stromband 15, dem oberen Elektrodenhalter 5 und der Oberelektrode 7 gebildet wird. Die hintere Sammelschiene 12 und die Strombrücke 14 sind durch eine schraffiert gezeichnete Isolierschicht 16 elektrisch getrennt an der vorderen Sammelschiene 10 bzw. an dem unteren Elektrodenhalter 6 befestigt.

Die Vorrichtung weist ein sich über die gesamte Breite der Schweißmaschine erstreckendes Querhaupt 17 auf, das mit Hilfe von seitlichen Elektrodenbalkenwangen 18 an einem nicht dargestellten Maschinengestell der Schweißmaschine befestigt ist. Jeder obere Elektrodenhalter 5 ist an einem Elektrodenstößel 19 befestigt, der im Querhaupt 17 gelagert und entsprechend den Richtungen des Doppelpfeiles P2 bewegbar ist. Die Bewegung in Richtung der Längsdrahtzuführebene E-E wird von einem hydraulisch betätigten Arbeitszylinder bewirkt, während der Elektrodenstößel 19 in entgegengesetzter Richtung von einer Rückholfeder 20 in seine Ausgangslage gebracht wird.

Die Längsdrähte L werden entsprechend der Pfeilrichtung P1 vorgeschoben, wobei sie jeweils von einer oberen und einer unteren Längsdrahtführung 21 bzw. 21' exakt in der Längsdrahtzuführebene E-E geführt werden. Die Längsdrahtführungen 21, 21' sind federnd ausgeführt, um beim Verschweißen der Querdrähte Q1, Q2 mit den Längsdrähten L etwas nach unten und gegebenenfalls nach oben nachgeben zu können. Der obere Querdraht Q1 wird mit Hilfe von mehreren oberen Querdrahtzubringerarmen 22 und der untere Querdraht Q2 mit Hilfe von mehreren unteren Querdrahtzubringerarmen 22' jeweils aus einem oberen Querdrahtkanal 23 bzw. einem unteren Querdrahtkanal 23' in die Schweißebene S-S gebracht. Jeder Schweißeinheit 1 ist je ein Zubringerarm 22 und 22' zugeordnet. Der obere Querdrahtkanal 23, der in Produktionsrichtung P1 gesehen auf der Einlaufseite der Längsdrahtschar L oberhalb der Längsdrahtzuführebene E-E und zwischen der Strombrücke 14 und der Schweißebene S-S, d.h. innerhalb des Stromkreises, angeordnet ist und sich über die gesamte Breite der Schweißmaschine erstreckt, wird nach unten von mehreren Querdrahtklappen 24 abgeschlossen, die entsprechend den Richtungen des Doppelpfeiles P3 schwenkbar in einer oberen Klappenwelle 25 gelagert sind. Der untere Querdrahtkanal 23', der in Produktionsrichtung P1 gesehen auf der Einlaufseite der Längsdrahtschar L unterhalb der Längsdrahtzuführebene E-E und zwischen der Strombrücke 14 und der Schweißebene S-S, d.h. innerhalb des Stromkreises, angeordnet ist und sich ebenfalls über die gesamte Breite der Schweißmaschine erstreckt, wird entsprechend nach oben von mehreren Querdrahtklappen 24' abgeschlossen, die entsprechend den Richtungen des Doppelpfeiles P3' schwenkbar in einer unteren Klappenwelle 25' gelagert sind. Jeder obere und untere Querdrahtzubringerarm 22; 22' weist an seinem vorderen Ende je eine Gabel 26 mit einer V-förmig ausgebildeten Öffnung (Fig. 3b) auf, wobei der Boden der Gabelöffnung zur Aufnahme des jeweiligen Querdrahtes Q1; Q2 dient. Der Boden der Gabelöffnung beschreibt zum Zubringen des oberen Querdrahtes Q1 eine Bewegungsbahn P4 von der Ausgangslage A über den Querdrahtkanal 23 zur Schweißposition Q1' in der Schweißebene S-S und zurück und zum Zubringen des unteren Querdrahtes Q2 eine Bewegungsbahn P5 von der Ausgangslage A' über den Querdrahtkanal 23' zur Schweißposition Q2' in der Schweißebene S-S und zurück. Bei diesen Zuführbewegungen werden der obere Querdraht Q1 zusätzlich von einer oberen Querdrahtführung 27 bzw. der untere Querdraht Q2 von einer unteren Querdrahtführung 27' geführt. Der genaue Verlauf der Bewegungsbahnen P4; P5, sowie die Bewegungseinrichtungen zum Erzeugen dieser Bewegungsbahnen P4, P5 sind in den Fig. 3a und 3b näher beschrieben.

Das in Fig. 2 dargestellte Ausführungsbeispiel der Vorrichtung dient zur Herstellung von Drahtgittermatten G mit veränderlichen Längsdrahtteilungen je Drahtgittermatte G und weist je Längsdraht L eine horizontal verschiebbare Schweißeinheit 2 auf. Die Schweißeinheit 2 besteht aus einem oberhalb der Längsdrahtzuführebene E-E angeordneten, oberen Schweißkopf 3' und einen unterhalb der Längsdrahtzuführebene E-E angeordneten, unteren Schweißkopf 4' auf, die beide gemeinsam quer zur Längsdrahtrichtung P1 horizontal in der Längsdrahtzuführebene E-E verschiebbar und zum Schweißen festlegbar sind. Der obere Schweißkopf 3' weist einen entsprechend den Richtungen des Doppelpfeiles P2 heb- und senkbaren, oberen Elektrodenhalter 5' und der untere Schweißkopf 4' einen feststehenden, unteren Elektrodenhalter 6' auf. Im Rahmen der Erfindung ist es jedoch auch möglich, den unteren Elektrodenhalter 6' ebenfalls hebund senkbar auszuführen. Am unteren Ende des oberen Elektrodenhalters 5' ist eine Oberelektrode 7' und am oberen Ende des unteren Elektrodenhalters 6' eine Unterelektrode 8` angeordnet. Die Oberelektrode 7' und die Unterelektrode 8' haben die Form eines Vielecks, beispielsweise eines Achtecks oder Zwölfecks, und sind über Verschraubungen 9 bzw. 9 mit ihren Elektrodenhaltern 5'; 6' verschraubt. Im Rahmen der Erfindung können die Ober- und Unterelektroden 7'; 8' an ihrem Umfang an jeder Vieleckfläche eine Querdrahtrille aufweisen, die zur Aufnahme des Querdrahtes Q1 bzw. Q2 beim Schweißen dient, V-förmig ausgebildet und an die Abmessungen des Querdrahtes Q angepasst ist. Im Rahmen der Erfindung können die Ober- und Unterelektrode 7; 8, wie in Fig. 1 dargestellt, die Form einer Kreisscheibe haben.

Jeder obere Elektrodenhalter 5` ist an einem Elektrodenstößel 19 befestigt, der in einem Stößelrahmen 28 gelagert und entsprechend den Richtungen des Doppelpfeiles P2 bewegbar ist. Die Bewegung in Richtung Längsdrahtzuführebene E-E wird. von einem hydraulisch betätigten Arbeitszylinder bewirkt, während der Elektrodenstößel 19 in entgegengesetzter Richtung von einer Rückholfeder 20 in seine Ausgangslage zurück gehoben wird. Über die gesamte Arbeitsbreite der Schweißmaschine erstreckt sich ein ortsfester Elektrodenbalken 29, an welchem die Stößelrahmen 28 der oberen Elektrodenhalter 5` quer zur Längsdrahtrichtung P1 horizontal verschiebbar und in der Schweißposition festlegbar angeordnet sind. Die Fixierung des oberen Elektrodenhalters 5' in der Schweißposition erfolgt mit Hilfe einer Feststelleinrichtung 30.

Am jedem Stößelrahmen 28 sind zwei Seitenplatten 31 befestigt, die eine mechanisch feste Verbindung zwischen dem oberen Schweißkopf 3` und dem unteren Schweißkopf 4' herstellen. Die Befestigung der Seitenplatten 31 weist eine Schwenkführung 32 auf, die es ermöglicht, den oberen und unteren Schweißkopf 3`; 4' zu Wartungszwecken oder bei Nichtverwendung dieser Schweißeinheit 2 aus der Schweißebene S-S herauszuschwenken. An den Seitenplatten 31 sind außerdem die Längsdrahtführungen 21, 21' befestigt.

Der untere Schweißkopf 4' stützt sich auf einem ortsfesten, horizontal quer zur Längsdrahtvorschubrichtung P1 verlaufenden Ständermittelteil 33 des Maschinengestells der Schweißmaschine ab, wobei der Ständermittelteil 33 eine Längsnut 34 aufweist, in welcher ein Gleitstein 35 der Feststelleinrichtung 36 des unteren Schweißkopfes 4' gleitet. Um den unteren Schweißkopf 4' in der Richtung quer zur Längsdrahtrichtung P1 horizontal zu verschieben, wird die Feststelleinrichtung 36 gelöst, der untere Schweißkopf 4' in seine neue Schweißposition verschoben und in dieser Position mit Hilfe der Feststelleinrichtung 36 festgelegt.

Die Stromversorgung des oberen Elektrodenhalters 5' und des unteren Elektrodenhalters 6' erfolgt über ein zweiadriges Stromkabel 37, das mit dem Schweißtransformator verbunden ist. Die Stromverbindung zum oberen Elektrodenhalter 5' erfolgt mit Hilfe einer Strombrücke 14', welche in Produktionsrichtung P1 gesehen auf der Einlaufseite der Längsdrahtschar L vor der Schweißebene S-S angeordnet ist, die Längsdrahtzuführebene E-E durchsetzt und im Bereich der Längsdrähte L entsprechende Durchgangsöffnungen für diese aufweist. Die Strombrücke 14' ist über ein flexibles Stromband 15 mit dem oberen, beweglichen Elektrodenhalter 5' verbunden. Der untere Elektrodenhalter 6' und die Strombrücke 14' sind durch eine Isolierschicht 16', sowie die Strombrücke 14' und der Ständermittelteil 33 durch eine Isolierschicht 16" elektrisch getrennt. Mit Hilfe der Feststelleinrichtung 37 sind der untere Elektrodenhalter 6', die Strombrücke 14' und der Ständermittelteil 33 in der Schweißposition fest miteinander verbunden.

Die Zuführung der Längsdrähte L und der Querdrähte Q1 und Q2 zur verschiebbaren Schweißeinheit 2 entspricht im Wesentlichen der in Fig. 1 beschriebenen Zuführung zu der feststehenden Schweißeinheit 1. Da die Schweißeinheiten 2 jedoch horizontal verschiebbar sind, müssen auch die Längsdrahtführungen 21, 21', die Querdrahtzubringerarme 22, 22' und die Querdrahtklappen 24, 24' horizontal zusammen mit den Schweißeinheiten 2 verschiebbar ausgeführt sein. Jede obere Querdrahtklappe 24 ist in einer in den Seitenplatten 31 befestigten Lagerung 38 entsprechend den Richtungen des Doppelpfeiles P3 schwenkbar gelagert. Jede untere Querdrahtklappe 24' ist in einer in den Seitenplatten 31 befestigten Lagerung 38' entsprechend den Richtungen des Doppelpfeiles P3' schwenkbar gelagert. Alle oberen Querdrahtklappen 24 werden von einer gemeinsamen, sich über die gesamte Arbeitsbreite der Schweißmaschine erstreckenden Betätigungseinrichtung 39 geöffnet, die am Maschinengestell der Schweißmaschine ortsfest angeordnet ist. Die Schließung der oberen Querdrahtklappen 24 erfolgt durch einen, sich ebenfalls über die gesamte Arbeitsbreite der Schweißmaschine erstreckenden, mit Pressluft gefüllten Luftschlauch 40, der entweder konstant mit Druck beaufschlagt nur passiv als Federelement arbeitet oder aktiv pneumatisch geschaltet wird. Eine Zentriernase 41 je Seitenplatte 31 gewährleistet die seitliche Führung der Schweißeinheit 2 beim Verschieben.

Alle unteren Querdrahtklappen 24' werden von einer gemeinsamen, sich über die gesamte Arbeitsbreite der Schweißmaschine erstreckenden Betätigungseinrichtung 39' geöffnet, die auf einer Befestigungskonsole 42 des Maschinengestells der Schweißmaschine ortsfest angeordnet ist. Die Schließung der unteren Querdrahtklappen 24' erfolgt ebenfalls durch einen, sich über die gesamte Arbeitsbreite der Schweißmaschine erstreckenden, mit Pressluft gefüllten Luftschlauch 40', der entweder konstant mit Druck beaufschlagt nur passiv als Federelement arbeitet oder aktiv pneumatisch geschaltet wird.

In Fig. 3a sind die Bewegungseinrichtungen zum Erzeugen der Bewegungsbahnen P4, P5 beim Zuführen der Querdrähte Q1 und Q2 von den Querdrahtkanälen 23, 23' in die Positionen Q1' bzw. Q2' in der Schweißebene S-S für die verschiebbaren Schweißeinheiten 2 näher beschrieben. Die oberen Querdrahtzubringerarme 22 sind an einem sich über gesamte Arbeitsbreite der Schweißmaschine erstreckenden, horizontal parallel zur Schweißebene S-S verlaufenden, oberen Zubringerbalken 43 verschiebbar angeordnet. Die Verschiebung erfolgt längs einer Schwalbenschwanzführung 44 des oberen Zubringerbalkens 43 und die Festlegung der Zubringerarme 22 in der jeweiligen Schweißposition erfolgt mit Hilfe einer Klemmbefestigung 45. Die unteren Querdrahtzubringerarme 22' sind an einem sich über gesamte Arbeitsbreite der Schweißmaschine erstreckenden, horizontal parallel zur Schweißebene S-S verlaufenden, unteren Zubringerbalken 46 verschiebbar angeordnet. Die Verschiebung erfolgt hierbei längs einer Schwalbenschwanzführung 44' des unteren Zubringerbalkens 46 und die Festlegung der Zubringerarme 22 in der jeweiligen Schweißposition erfolgt mit Hilfe einer Klemmbefestigung 45'.

Die beiden Zubringerbalken 43; 46 sind an ihren Enden in je einem Lager 47 schwenkbar gelagert, das jeweils an einem Ende eines einarmigen, äußeren Vorschubhebels 48 angeordnet ist. Das andere Ende der äußeren Vorschubhebel 48 ist jeweils drehfest mit einer ortsfesten, sich über die Arbeitsbreite der Schweißmaschine erstreckenden Welle 49 verbunden, die in den Seitenschildern des Maschinengestells der Schweißmaschine schwenkbar gelagert ist. Mit der Welle 49 ist außerdem ein einarmiger, innerer Vorschubhebel 50 drehfest verbunden, an dessen freiem Ende eine Exzenterrolle 51 angeordnet ist. Die Exzenterrolle 51 liegt auf einer Vorschubnocke 52 auf, die mit einer entsprechend der Pfeilrichtung P6 kontinuierlich drehbaren Antriebswelle 53 fest verbunden ist. Um ein Abheben der Exzenterrolle 51 von der Vorschubnocke 52 zu vermeiden, wird der innere Vorschubhebel 50 mit Hilfe eines Arbeitszylinders angepresst, der im Anpresspunkt 54 am inneren Vorschubhebel 50 angreift.

Mit der Antriebswelle 53 ist außerdem eine Kippnocke 55 drehfest verbunden, die in einem fest eingestellten Verhältnis zur Vorschubnocke 52 angeordnet ist. Ein einarmiger, innerer Kipphebel 56 ist an einem Ende mit einer im Maschinengestell der Schweißmaschine drehbar gelagerten Welle 57 drehfest verbunden. Das freie Ende des inneren Kipphebels 56 trägt eine Rolle 58, die auf der Kippnocke 55 aufliegt. Um ein Abheben der Rolle 58 von der Kippnocke 55 zu vermeiden, wird der innere Kipphebel 56 mit Hilfe eines Arbeitszylinders angepresst, der im Anpresspunkt 59 am inneren Kipphebel 56 angreift. Mit der Welle 57 ist außerdem ein einarmiger, äußerer Kipphebel 60 drehfest verbunden, dessen freies Ende je einen Anlenkpunkt 61 und 61' für eine Zylinderkonsole 62 bzw. 62' aufweist. Die Zylinderkonsole 62 trägt einen Arbeitszylinder 63, der im Anlenkpunkt 64 mit dem oberen Zubringerbalken 43 verbunden ist. Die Zylinderkonsole 62' trägt einen Arbeitszylinder 63', der im Anlenkpunkt 64' mit dem unteren Zubringerbalken 46 verbunden ist. Beide Arbeitszylinder 63, 63' sind mit Pressluft beaufschlagt und dienen als Federelement, um die Bewegung der Querdrähte Q1, Q2 im Bereich der Schweißebene S-S am Ende der Bewegungsbahnen P4, P5 weich abzufedern.

Die Bewegungseinrichtungen für die Zuführung der Querdrähte Q1; Q2 zu den feststehenden Schweißeinheiten 1 sind identisch mit den beschriebenen Bewegungseinrichtungen für die verschiebbaren Schweißeinheiten 2. Da die feststehenden Schweißeinheiten 1 nicht verschoben werden und immer ortsfest bleiben, können die Schwalbenschwanzführungen 44, 44' und die Klemmbefestigungen 45, 45' für die Querdrahtzubringerarme 22, 22' entfallen.

In der Fig. 3b ist der genaue Verlauf der Zubringerbahnen P4 und P5 von ihren Ausgangslagen A und A' über die Querdrahtkanäle 23; 23' zu den jeweiligen Schweißpositionen Q1'; Q2' in der Schweißebene S-S dargestellt.

Der obere Querdraht Q1 und der untere Querdraht Q2 werden gleichzeitig in folgender Weise zugeführt:

Durch Drehen der Antriebswelle 53 werden die Vorschubnocke 52 und die Kippnocke 55 in einem festen Verhältnis zueinander in Pfeilrichtung P6 mitgedreht, wobei die beiden Bewegungsbahnen P4 und P5 eine Kombination von gleichzeitiger Vorschub- und Kippbewegung der Zubringerarme 22, 22' sind. Hierbei wird der Anteil der Vorschubbewegung durch die Vorschubnocke 52, den innere Vorschubhebel 50 und die äußeren Vorschubhebel 48 bewirkt, während der Anteil der Kippbewegung durch die Kippnocke 55, den inneren Kipphebel 56 und den äußeren Kipphebel 60 erzeugt wird.

Zum Zuführen der Querdrähte Q1, Q2 wird der innere Vorschubhebel 50 durch die entsprechende Form der Vorschubnocke 52 abgesenkt, wodurch die äußeren Vorschubhebel 48 in Richtung zur Schweißebene S-S geschwenkt werden, so dass sich die Zubringerarme 22, 22' ebenfalls in Richtung Schweißebene S-S bewegen. Gleichzeitig wird der innere Kipphebel 56 durch die entsprechende Form der Kippnocke 55 angehoben, wodurch der äußere Kipphebel 60 sich nach oben bewegt, so dass die oberen Zubringerarme 22 nach unten geschwenkt werden, während die unteren Zubringerarme 22' nach oben geschwenkt werden. Jede Gabel 26 des oberen Zubringerarmes 22 erfasst bei der Zuführbewegung den oberen, sich im oberen Querdrahtkanal 23 befindlichen oberen Querdraht Q1, nimmt diesen in Querrichtung aus dem Querdrahtkanal 23 heraus und fördert ihn geführt durch die obere Querdrahtführung 27 nach unten bis zu den Längsdrähten L und entlang den Längsdrähten L bis zur Schweißposition Q1' in der Schweißebene S-S. Der waagrechte Verlauf der Bewegungsbahn P4 im Bereich der Längsdrähte L ist dadurch bedingt, dass der obere Querdraht Q1 von der Gabel 26 nicht festgehalten wird, sondern nach unten frei auf die Längsdrähte L fallen kann. Die Zuführbewegung des unteren Zubringerarmes 22' zum Zuführen des unteren Querdrahtes Q2 erfolgt im wesentlichen in gleicher Weise und gleichzeitig mit der Zuführung des oberen Querdrahtes Q1. Jede Gabel 26 des unteren Zubringerarmes 22' erfasst bei der Zuführbewegung den unteren, sich im unteren Querdrahtkanal 23' befindlichen unteren Querdraht Q2, nimmt diesen in Querrichtung aus dem Querdrahtkanal 23' heraus und fördert ihn geführt durch die untere Querdrahtführung 27' nach oben bis zur Schweißposition Q2' in der Schweißebene S-S, wobei der untere Querdraht Q2 auf den Unterelektroden 8; 8' abgelegt werden.

Durch entsprechende Formgebung der Vorschubnocke 52 und der Kippnocke 55 bleiben die Gabeln 26 der Zubringerarme 22, 22' trotz der kontinuierlichen Drehbewegung der Antriebswelle 53 in den Schweißpositionen Q1', Q2' solange bis die Querdrähte Q1, Q2 durch die Oberelektroden 7, 7' und die Unterelektroden 8, 8' festgeklemmt sind. Nach dem Festklemmen der Querdrähte Q1, Q2 werden die Zubringerarme 22, 22' in folgender Weise in ihre Ausgangslagen A, A' zurückgebracht: Der innere Vorschubhebel 50 wird durch die entsprechende Form der Vorschubnocke 52 angehoben, wodurch die äußeren Vorschubhebel 48 von der Schweißebene S-S weggeschwenkt werden; so dass sich die Zubringerarme 22, 22' ebenfalls von der Schweißebene S-S wegbewegen. Gleichzeitig wird der innere Kipphebel 56 durch die entsprechende Form der Kippnocke 55 abgesenkt, wodurch der äußere Kipphebel 60 sich nach unten bewegt, so dass die oberen Zubringerarme 22 nach oben geschwenkt werden, während die unteren Zubringerarme 22' nach unten geschwenkt werden.

In der Fig. 3b sind außerdem für den oberen Querdrahtkanal 23 mehrere obere Querdrahtbremshebel 65 und für den unteren Querdrahtkanal 23' mehrere untere Querdrahtbremshebel 65' schematisch dargestellt, die jeweils an ihrem Ende eine Bremsbacke 66 aufweisen, mit deren Hilfe beim Abtrennen des jeweiligen Querdrahtes Q1; Q2 von den zugeführten Materialsträngen der Querdraht Q1; Q2 im jeweiligen Querdrahtkanal 23; 23' festgehalten wird. Je Schweißeinheit 1 bzw. 2 ist je ein oberer und unterer Querdrahtbremshebel 65; 65' vorgesehen. Beim Herausfördern der Querdrähte Q1; Q2 aus den Querdrahtkanälen 23; 23' werden die Querdrahtbremshebel 65; 65' entsprechend den Richtungen der Doppelpfeile P7; P7' weggeschwenkt und anschließend wieder in ihre Ausgangslage zurückgeschwenkt.

Die erfindungsgemäßen Maschine arbeitet in folgender Weise:

Entlang der Längsdrahtzuführebene E-E werden die Längsdrähte in der gewünschten Längsdrahtteilung in Pfeilrichtung P1, geführt durch die Längsdrahtführungen 21; 21' taktweise den Schweißeinheiten 1; 2 in der Schweißebene S-S zugeführt. Gleichzeitig werden der obere Querdraht Q1 und der untere Querdraht Q2 senkrecht zur Längsdrahtvorschubrichtung P1 in die Querdrahtkanäle 23; 23' eingeschossen und vom Materialstrang abgetrennt. Durch die oben beschriebenen Bewegungsmechanismen erfassen die Zubringerarme 22; 22' die Querdrähte Q1; Q2, kämmen sie aus den Querdrahtkanälen 23; 23' aus und bringen sie in die Schweißebene S-S, wo sie jeweils oberhalb und unterhalb der Längsdrähte L genau vertikal übereinanderliegend auf bzw. unter den Längsdrähten L angeordnet werden. Sobald die Querdrähte Q1; Q2 die Querdrahtkanäle 23; 23' verlassen haben, können neue Querdrähte in diese eingeführt werden. Zum Verschweißen der Querdrähte Q1'; Q2' mit den Längsdrähten L werden die Elektrodenhalter 5; 5' in der entsprechenden Richtung des Doppelpfeiles P2 solange nach unten bewegt, bis die Querdrähte Q1'; Q2' zwischen den Schweißelektroden 7, 7'; 8, 8' und den Längsdrähten L festgeklemmt sind. Zu diesem Zeitpunkt lösen sich die Gabeln 26 der Zubringerarme 22; 22' von den Querdrähten Q1'; Q2' und bewegen sich in ihre Ausgangslagen A; A' zurück, um zur Übernahme neuer Querdrähte,bereit zu sein. Die obere Elektrodenhalter 5; 5' werden mit dem erforderlichen Schweißdruck beaufschlagt, der Schweißstrom eingeschaltet und mit Hilfe der Schweißelektroden 7, 7'; 8, 8' die Querdrähte Q1; Q2 mit den Längsdrähten L verschweißt. Nach erfolgter Schweißung wird der Schweißstrom abgeschaltet und die oberen Elektrodenhalter 5; 5' bewegen sich nach oben, wodurch die Kreuzungspunkte der Querdrähte mit den Längsdrähten entlastet werden und sich von den Oberelektroden 7, 7' lösen. Durch die federnde Ausführung der Längsdrahtführungen 21, 21' wird die Drahtgittermatte G leicht angehoben, so dass sich die Kreuzungspunkte auch von den Unterelektroden 8, 8' lösen. Die Drahtgittermatte G wird anschließend in Pfeilrichtung P1 soweit aus der Schweißebene S-S herausgezogen, bis der gewünschte Abstand erreicht ist, um in einem folgenden Arbeitstakt weitere Querdrähte Q1; Q2 mit den Längsdrähten L verschweißen zu können. Die Oberelektroden 7; 7' werden nur soweit angehoben, bis der Öffnungsspalt zwischen den Längsdrähten L und den Schweißelektroden 7, 7'; 8, 8' groß genug ist, um weitere Querdrähte Q1, Q2 in die Schweißebene S-S einführen zu können.

Zum Herstellen von Drahtgittermatten G mit unterschiedlicher Längsdrahtteilung werden die verschiebbaren Schweißeinheiten 2 vorher in ihre neuen Schweißpositionen senkrecht zur Längsdrahtvorschubrichtung P1 verschoben und dort festgelegt, wobei die entsprechenden Feststelleinrichtungen 36 für die unteren Schweißköpfe 4', sowie die Klemmbefestigungen 45; 45' für die oberen und unteren Zubringerarme 22, 22' betätigt werden müssen.

Es versteht sich, daß die dargestellten Ausführungsbeispiele im Rahmen des allgemeinen Erfindungsgedankens verschiedentlich, insbesondere hinsichtlich der Ausgestaltung und Ausführung der Zubringerarme und der Bewegungseinrichtungen der Zubringerarme abgewandelt werden können. Die Bewegungen der Zubringerarme können durch getrennte Antriebe erfolgen, die jedoch durch entsprechende steuerungstechnische Maßnahmen synchronisiert werden müssen. Außerdem können die Gabeln der Zubringerarme als zangenartige Greiforgane ausgebildet sein, um die Querdrähte bei ihrer Zuführbewegung genau zu führen. Weiters ist es im Rahmen der Erfindung möglich, bereits vorabgelängte Querdrähte Q1; Q2 den Querdrahtkanälen 23; 23' zuzuführen, wobei die Zuführung entweder senkrecht zur Längsdrahtvorschubrichtung P1 von der Seite oder parallel zur Längsdrahtvorschubrichtung P1 erfolgen kann.

Mit Hilfe entsprechender Steuerelemente können die Drehbewegung der Antriebswelle 53 für die Vorschubnocke 52 und für die Kippnocke 55 mit den Bewegungen zum Zuführen der Querdrähte Q1, Q2 in die Querdrahtkanäle 23, 23' und den Vorschubbewegungen der Längsdrähte L und der Drahtgittermatte G synchronisiert werden. Durch diese synchrone Steuerung aller Bewegungsabläufe der Gitterschweißmaschine werden diese optimal aufeinander abgestimmt und etwaige Totzeiten im Produktionsablauf vermieden.

## Patentansprüche

1. Nach der elektrischen Widerstandsmethode arbeitende Vielpunkt-Schweißmaschine zum Herstellen von Drahtgittermatten aus einer Schar von parallelen Längsdrähten und diese rechtwinkelig kreuzenden Querdrähten, die jeweils oberhalb und unterhalb der Längsdrähte einander gegenüberliegend angeordnet und mit den Längsdrähten verschweißt sind, mit je einem oberhalb und unterhalb einer horizontalen Längsdrahtzufuhrebene angeordneten Querdrahtkanal, mit Querdrahtzubringern, welche die Querdrähte aus den Querdrahtkanälen in die Schweißebene zwischen die Längsdrahtschar und beiderseits derselben angeordneten Reihen von heb- und senkbaren oberen Schweißelektroden und unteren Schweißelektroden bringen, und mit je einer die Längsdrahtzuführebene durchsetzenden Strombrücke für die Oberelektroden, **dadurch gekennzeichnet, dass** je ein Querdrahtkanal (23; 23') oberhalb und unterhalb der Längsdrahtzuführebene (E-E) in Produktionsrichtung (P1) gesehen auf der Einlaufseite der Längsdrahtschar (L) vor der durch die Ober- und Unterelektroden (7, 7'; 8, 8') definierten Schweißebene (S-S) angeordnet ist, dass jeder Querdrahtzubringer einen gleichzeitig schwenk- und vorschiebbaren Zubringerarm (22, 22') aufweist, und dass die beiden Zubringerarme (22, 22') in einer synchronen Zuführbewegung (P4, P5) gleichzeitig die Querdrähte (Q1, Q2) von den Querdrahtkanälen (23, 23') in die Schweißebene (S-S) fördern, wobei der obere Querdraht (Q1) auf den Längsdrähten (L) und der untere Querdraht (Q2) auf den Unterelektroden (8, 8') abgelegt wird.

2. Gitterschweißmaschine nach Anspruch 1, **dadurch gekennzeichnet, dass** jeder Zubringerarm (22, 22') an seinem freien Ende eine V-förmige Gabel (26) zum Erfassen eines Querdrahtes (Q1; Q2) aufweist.

3. Gitterschweißmaschine nach Anspruch 1 oder 2, **dadurch gekennzeichnet, dass** die Querdrahtkanäle (23, 23') zwischen der Strombrücke (14, 14') und den Oberelektroden (7, 7') bzw. den Unterelektroden (8, 8') angeordnet sind.

4. Gitterschweißmaschine nach einem der Ansprüche 1 bis 3, **dadurch gekennzeichnet, dass** die Zubringerarme (22, 22') eine gleichzeitige Vorschub- und Kippbewegung (P4, P5) ausführen, wobei eine Bewegungseinrichtung vorgesehen ist, die von einer Vorschubnocke (52) und einer Kippnocke (55) gesteuert wird, welche in einem festeingestellten Verhältnis auf einer gemeinsamen, kontinuierlich antreibbaren (P6) Antriebswelle (53) drehfest angeordnet sind.

5. Gitterschweißmaschine nach Anspruch 4, **dadurch gekennzeichnet, dass** jeder Zubringerarm (22, 22') auf je einem gemeinsam gelagerten (47) Zubringerbalken (43, 46) befestigt ist, wobei jeder Zubringerbalken (43, 46) gleichzeitig durch von der Vorschubnocke (52) gesteuerte, gemeinsam drehfest gelagerte, innere (50) und äußere (48) Vorschubhebel sowie von der Kippnocke (55) gesteuerte, gemeinsam drehfest gelagerte, innere (56) und äußere. Kipphebel (60) schwenk- und vorschiebbar (P4, P5) ist.

6. Gitterschweißmaschine nach Anspruch 5, **dadurch gekennzeichnet, dass** zum weichen Abfedern der Querdrähte (Q1, Q2) beim Positionieren in den Schweißpositionen (Q1', Q2') der äußere Kipphebel (60) über ein Federelement (62, 62') jeweils mit den Zubringerbalken (43; 46) verbunden ist.

7. Gitterschweißmaschine nach einem der Ansprüche 4 bis 6, **dadurch gekennzeichnet, dass** die Vorschubnocke (52) und die Kippnocke (55) derart gestaltet sind, dass nach dem Ablegen der Querdrähte (Q1, Q2) in ihren Schweißpositionen (Q1', Q2') in der Schweißebene (S-S) trotz weiterhin kontinuierlichem Antrieb der Antriebswelle (53) die Zubringerarme (22, 22') solange still stehen, bis die Querdrähte (Q1; Q2) sicher zwischen den Längsdrähten (L) und den Ober- und Unterelektroden (7, 7'; 8, 8') festgeklemmt sind.

8. Gitterschweißmaschine nach einem der Ansprüche 4 bis 7, **dadurch gekennzeichnet, dass** die Drehbewegung der Antriebswelle (53) für die Vorschubnocke (52) und für die Kippnocke (55) mit den Bewegungen zum Zuführen der Querdrähte (Q1, Q2) in die Querdrahtkanäle (23, 23') und mit den Vorschubbewegungen der Längsdrähte (L) und der Drahtgittermatte (G) mit Hilfe einer zentralen Steuerung abgestimmt sind.

9. Gitterschweißmaschine nach einem der Ansprüche 1 bis 8, **dadurch gekennzeichnet, dass** die Querdrähte (Q1, Q2) beim Zuführen durch Führungen (27, 27') geführt sind.

10. Gitterschweißmaschine nach einem der Ansprüche 1 bis 9, **dadurch gekennzeichnet, dass** die Querdrahtkanäle (23, 23') durch wegschwenkbare (P3, P3') Querdrahtklappen (24, 24') verschließbar sind und dass die Querdrahtkanäle (23, 23') mehrere Bremshebel (65, 65') mit Bremsbacken (66) zum Stillsetzen der Querdrähte (Q1, Q2) beim Abtrennen vom Materialstrang aufweisen.

11. Gitterschweißmaschine nach einem der Ansprüche 1 bis 10, **dadurch gekennzeichnet, dass** zum Ändern der Längsdrahtteilung die Oberelektroden (7, 7') in einem horizontal in der Schweißebene (S-S) verschiebbaren oberen Schweißkopf (3') und die Unterelektroden (8, 8') in einem horizontal in der Schweißebene (S-S) verschiebbaren unteren Schweißkopf (4') angeordnet sind, wobei der obere Schweißkopf (3') und der untere Schweißkopf (4') durch zwei Seitenplatten (31) verbunden sind, und dass die Zubringerarme (22, 22') mit Hilfe je einer Klemmbefestigung (45, 45') horizontal parallel zur Schweißebene (S-S) verschiebbar und festlegbar an ihrem Zubringerbalken (43; 46) angeordnet sind.

12. Gitterschweißmaschine nach Anspruch 11, **dadurch gekennzeichnet, dass** die Längsdrahtführungen (21, 21') in den Seitenplatten (31) angeordnet sind und dass die Längsdrahtführungen (21, 21'), die Querdrahtführungen (27, 27'), die Querdrahtklappen (24, 24') und die Bremshebel (65, 65') gemeinsam mit den Schweißköpfen (3', 4') horizontal parallel zur Schweißebene (S-S) verschiebbar sind.

## Claims

1. Multi-spot resistance welding machine for the production of wire gratings consisting of an assemblage of parallel longitudinal wires and transverse wires intersecting them at right angles, the transverse wires being arranged opposite one another above and below the longitudinal wires and being welded to the longitudinal wires, comprising respective transverse wire channels arranged above and below a horizontal longitudinal wire feed plane, transverse wire feeders which bring the transverse wires from the transverse wire channels into the welding plane between the assemblage of longitudinal wires and rows of liftable and lowerable upper welding electrodes and lower welding electrodes arranged on either side thereof, and respective jumpers for the upper electrodes traversing the longitudinal wire feed plane, **characterised in that** respective transverse wire channels (23; 23') are arranged above and below the longitudinal wire feed plane (E-E) on the entry side of the assemblage of longitudinal wires (L) upstream of the welding plane (S-S) defined by the upper and lower electrodes (7, 7'; 8, 8') as viewed in the direction of production (P1), that each transverse wire feeder has a feeder arm (22, 22') which can simultaneously be swivelled and advanced and that the two feeder arms (22, 22') simultaneously convey the transverse wires (Q1, Q2) from the transverse wire channels (23, 23') to the welding plane (S-S) in one synchronous feed movement (P4, P5), the upper transverse wire (Q1) being deposited on the longitudinal wires (L) and the lower transverse wire (Q2) being deposited on the lower electrodes (8, 8').

2. Grid welding machine according to claim 1, **characterised in that** each feeder arm (22, 22') is provided at its free end with a V-shaped fork (26) for gripping a transverse wire (Q1; Q2).

3. Grid welding machine according to claim 1 or claim 2, **characterised in that** the transverse wire channels (23, 23') are arranged between the jumper (14, 14') and the upper electrodes (7, 7') or the lower electrodes (8, 8').

4. Grid welding machine according to one of claims 1 to 3, **characterised in that** the feeder arms (22, 22') execute a simultaneous feed and rocking movement (P4, P5), a moving device being provided and being controlled by a feed cam (52) and a rocker cam (55) arranged in a torsion-resistant manner in a defined relationship on a common drive shaft (53) which can be driven continuously (P6).

5. Grid welding machine according to claim 4, **characterised in that** each feeder arm (22, 22') is secured to a respective jointly supported (47) feeder bar (43, 46), wherein each feeder bar (43, 46) can be swivelled and advanced (P4, P5) simultaneously by inner (50) and outer (48) feed levers jointly mounted in a torsion-resistant manner and controlled by the feed cam (52) and by inner (56) and outer rocker levers (60) jointly mounted in a torsion-resistant manner and controlled by the rocker cam (55).

6. Grid welding machine according to claim 5, **characterised in that** the outer rocker lever (60) is connected to the feeder bars (43; 46) by means of respective spring elements (62, 62') for soft cushioning of the transverse wires (Q1, Q2) when they are positioned in the welding positions (Q1', Q2').

7. Grid welding machine according to one of claims 4 to 6, **characterised in that** the feed cam (52) and the rocker cam (55) are designed in such a manner that, once the transverse wires (Q1, Q2) have been deposited in their welding positions (Q1', Q2') in the welding plane (S-S), the feeder arms (22, 22') are out of action until the transverse wires (Q1; Q2) are clamped firmly between the longitudinal wires (L) and the upper and lower electrodes (7, 7'; 8, 8') in spite of the further continuous drive of the drive shaft (53).

8. Grid welding machine according to one of claims 4 to 7, **characterised in that** the rotational movement of the drive shaft (53) for the feed cam (52) and for the rocker cam (55) is coordinated with the movements for feeding the transverse wires (Q1, Q2) to the transverse wire channels (23, 23') and with the feed movements of the longitudinal wires (L) and the wire grating (G) with the aid of a central control unit.

9. Grid welding machine according to one of claims 1 to 8, **characterised in that** the transverse wires (Q1, Q2) are guided by guides (27, 27') during feeding.

10. Grid welding machine according to one of claims 1 to 9, **characterised in that** the transverse wire channels (23, 23') can be closed by means of transverse wire flaps (24, 24') which can be swung away (P3, P3') and that the transverse wire channels (23, 23') have a plurality of brake levers (65, 65') with brake shoes (66) for stopping the transverse wires (Q1, Q2) when they are cut off from the extrudate.

11. Grid welding machine according to one of claims 1 to 10, **characterised in that**, in order to change the pitch of the longitudinal wires, the upper electrodes (7, 7') are arranged in an upper welding head (3') displaceable horizontally in the welding plane (S-S) and the lower electrodes (8, 8') are arranged in a lower welding head (4') displaceable horizontally in the welding plane (S-S), the upper welding head (3') and the lower welding head (4') being connected together by means of two side plates (31), and that the feeder arms (22, 22') are arranged on their feeder bars (43; 46) in such a manner that they can be displaced and fixed horizontally parallel to the welding plane (S-S) with the aid of respective clamping fasteners (45, 45').

12. Grid welding machine according to claim 11, **characterised in that** the longitudinal wire guides (21, 21') are arranged in the side plates (31) and that the longitudinal wire guides (21, 21'), the transverse wire guides (27, 27'), the transverse wire flaps (24, 24') and the brake levers (65, 65') can be displaced horizontally parallel to the welding plane (S-S) together with the welding heads (3',4').

## Revendications

1. Machine de soudage multipoints fonctionnant selon le procédé de résistance électrique, pour la production de treillages métalliques à partir d'une nappe constituée de fils métalliques longitudinaux parallèles et de fils métalliques transversaux qui croisent ces derniers à angle droit, sont respectivement disposés en vis-à-vis mutuel au-dessus et au-dessous des fils longitudinaux, et sont soudés auxdits fils longitudinaux, comprenant un canal à fils transversaux respectivement placé au-dessus et au-dessous d'un plan horizontal de délivrance des fils longitudinaux, et équipé d'organes délivreurs de fils transversaux qui extraient lesdits fils transversaux de leurs canaux et les amènent dans le plan de soudage entre la nappe de fils longitudinaux, et de rangées agencées de part et d'autre de ladite nappe, et constituées d'électrodes supérieures de soudage et d'électrodes inférieures de soudage pouvant être soulevées et abaissées ; et un pont électrique respectif, affecté aux électrodes supérieures et traversant le plan de délivrance des fils longitudinaux, **caractérisée par le fait qu'**un canal respectif (23 ; 23') à fils transversaux est disposé au-dessus et au-dessous du plan (E-E) de délivrance des fils longitudinaux et, en observant dans la direction de production (P1), du côté arrivée de la nappe (L) de fils longitudinaux, devant le plan de soudage (S-S) défini par les électrodes supérieures et inférieures (7, 7' ; 8, 8') ; **par le fait que** chaque organe délivreur de fils transversaux présente un bras délivreur (22, 22') pouvant simultanément pivoter et coulisser ; et **par le fait que** les deux bras délivreurs (22, 22') acheminent simultanément les fils transversaux (Q1, Q2) jusque dans le plan de soudage (S-S) à partir des canaux (23, 23') à fils transversaux, en un mouvement synchrone d'amenée (P4, P5), sachant que le fil transversal supérieur (Q1) est déposé sur les fils longitudinaux (L), et que le fil transversal inférieur (Q2) est déposé sur les électrodes inférieures (8, 8').

2. Machine de soudage de treillages, selon la revendication 1, **caractérisée par le fait que** chaque bras délivreur (22, 22') comporte, à son extrémité libre, une fourche (26) configurée en V pour saisir un fil transversal (Q1 ; Q2).

3. Machine de soudage de treillages, selon la revendication 1 ou 2, **caractérisée par le fait que** les canaux (23, 23') à fils transversaux sont interposés entre le pont électrique (14, 14') et, respectivement, les électrodes supérieures (7, 7') ou les électrodes inférieures (8, 8').

4. Machine de soudage de treillages, selon l'une des revendications 1 à 3, **caractérisée par le fait que** les bras délivreurs (22, 22') accomplissent un mouvement simultané d'avance et de basculement (P4, P5), sachant qu'il est prévu un dispositif de mise en mouvement commandé par une came d'avance (52) et par une came de basculement (55) qui sont calées avec verrouillage rotatif, selon une relation de réglage fixe, sur un arbre commun d'entraînement (53) pouvant être mené (P6) en continu.

5. Machine de soudage de treillages, selon la revendication 4, **caractérisée par le fait que** chaque bras délivreur (22, 22') est fixé sur une barre respective d'amenée (43, 46) à montage commun (47), chaque barre d'amenée (43, 46) pouvant être simultanément animée de pivotements et de coulissements (P4, P5) sous l'action de leviers d'avance intérieur (50) et extérieur (48), commandés par la came d'avance (52) et montés conjointement avec verrouillage rotatif; ainsi que sous l'action de leviers de basculement intérieur (56) et extérieur (60) commandés par la came de basculement (55) et montés conjointement avec verrouillage rotatif.

6. Machine de soudage de treillages, selon la revendication 5, **caractérisée par le fait que**, en vue d'amortir mollement les fils transversaux (Q1, Q2) lors de la mise en place dans les positions de soudage (Q1', Q2'), le levier extérieur de basculement (60) est respectivement relié aux barres d'amenée (43 ; 46) par l'intermédiaire d'un élément élastique (62, 62').

7. Machine de soudage de treillages, selon l'une des revendications 4 à 6, **caractérisée par le fait que** la came d'avance (52) et la came de basculement (55) sont configurées de façon telle que, après le dépôt des fils transversaux (Q1, Q2) dans leurs positions de soudage (Q1', Q2') dans le plan de soudage (S-S), les bras délivreurs (22, 22') s'immobilisent, malgré la poursuite de l'entraînement en continu de l'arbre d'entraînement (53), jusqu'à ce que les fils transversaux (Q1 ; Q2) soient coincés rigidement entre les fils longitudinaux (L) et les électrodes supérieures et inférieures (7, 7' ; 8, 8').

8. Machine de soudage de treillages, selon l'une des revendications 4 à 7, **caractérisée par le fait que** le mouvement rotatoire de l'arbre d'entraînement (53) affecté à la came d'avance (52) et à la came de basculement (55) est coordonné, à l'aide d'une commande centrale, avec les mouvements visant à introduire les fils transversaux (Q1, Q2) dans les canaux (23, 23') à fils transversaux, et avec les mouvements d'avance des fils longitudinaux (L) et du treillage métallique (G).

9. Machine de soudage de treillages, selon l'une des revendications 1 à 8, **caractérisée par le fait que** les fils transversaux (Q1, Q2) sont guidés par l'intermédiaire de guides (27, 27') au cours de la délivrance.

10. Machine de soudage de treillages, selon l'une des revendications 1 à 9, **caractérisée par le fait que** les canaux (23, 23') à fils transversaux peuvent être obturés par des volets (24, 24') écartables par pivotement (P3, P3'); et **par le fait que** lesdits canaux (23, 23') à fils transversaux présentent plusieurs leviers de freinage (65, 65') munis de mâchoires de freinage (66), en vue d'immobiliser les fils transversaux (Q1, Q2) lors de la séparation d'avec le matériau en défilement.

11. Machine de soudage de treillages, selon l'une des revendications 1 à 10, **caractérisée par le fait que**, en vue de modifier le pas de répartition des fils longitudinaux, les électrodes supérieures (7, 7') sont disposées dans une tête supérieure de soudage (3') pouvant coulisser horizontalement dans le plan de soudage (S-S), et les électrodes inférieures (8, 8') sont disposées dans une tête inférieure de soudage (4') pouvant coulisser horizontalement dans ledit plan de soudage (S-S), ladite tête supérieure de soudage (3') et ladite tête inférieure de soudage (4') étant reliées par deux plaques latérales (31) ; et **par le fait que** les bras délivreurs (22, 22') sont installés sur leur barre d'amenée (43 ; 46) avec faculté d'arrêt et de coulissement horizontal parallèlement au plan de soudage (S-S), à l'aide d'une fixation respective de coincement (45, 45').

12. Machine de soudage de treillages, selon la revendication 11, **caractérisée par le fait que** les guides (21, 21') des fils longitudinaux sont logés dans les plaques latérales (31) ; et **par le fait que** lesdits guides (21, 21') des fils longitudinaux, les guides (27, 27') des fils transversaux, les volets (24, 24') associés auxdits fils transversaux, et les leviers de freinage (65, 65'), peuvent accomplir des coulissements horizontaux parallèlement au plan de soudage (S-S), conjointement aux têtes de soudage (3', 4').
